# EUROPÄISCHE PATENTANMELDUNG

(11) **EP 2 990 609 A1**
(43) Veröffentlichungstag der Anmeldung: **02.03.2016**
(21) Anmeldenummer: 14183042.2
(22) Anmeldetag: 01.09.2014
(51) Int. Cl.: F01D 5/26, G01M 1/04, G01M 1/22, F01D 5/02, F01D 5/04, F01D 5/06, F01D 17/04, F01D 21/00, G01H 1/00

(54) **Verfahren zum Betreiben einer Maschinenanlage mit einem Wellenstrang**

(71) Anmelder: Siemens Aktiengesellschaft, 80333 München (DE)
(72) Erfinder: Balkowski, Ingo, 47647 Kerken (DE); Ehehalt, Ulrich, 45239 Essen (DE); Hensel, Oliver, 45468 Mülheim an der Ruhr (DE); Huckriede, Dirk, 41352 Korschenbroich (DE); Küpper, Thomas, 41564 Kaarst (DE); Lacombe, Bernd, 46348 Raesfeld-Erle (DE); Mermertas, Ümit, 45478 Mülheim an der Ruhr (DE); Pfeifer, Uwe, 12557 Berlin (DE)

(57) **Zusammenfassung**

Die Erfindung betrifft ein Verfahren zum Betreiben einer einen Wellenstrang (2) aufweisenden Maschinenanlage (1) mit den Schritten: a) Rechnerisches Bestimmen der Eigenfrequenz von mindestens einer Torsionsschwingungsmode des Wellenstrangs und rechnerisches Bestimmen der während einer Schwingungsperiode der Torsionsschwingungsmode auftretenden mechanischen Spannungen des Wellenstrangs; b) Bestimmen jeweils einer Korrelation für jede Torsionsschwingungsmode zwischen einer ersten Spannungsamplitude, die an einer Position des Wellenstrangs auftritt, die für die Bildung von Spannungsschäden anfällig ist, und einer zweiten Spannungsamplitude, die an einer Messstelle (7 bis 11) des Wellenstrangs auftritt, anhand der für die jeweilige Torsionsschwingungsmode rechnerisch bestimmten Spannungen; c) Festlegen einer maximalen ersten Spannungsamplitude für die Position; d) Bestimmen einer der maximalen ersten Spannungsamplitude entsprechenden maximalen zweiten Spannungsamplitude für die Messstelle anhand der Korrelation; e) Messen der Spannung des Wellenstrangs während der Wellenstrang rotiert an der Messstelle in Abhängigkeit von der Zeit; f) Bestimmen einer Spannungsamplitude bei jeder Eigenfrequenz aus der gemessenen Spannung; g) Ausgeben eines Signals in dem Fall, dass die aus den gemessenen Spannungen bestimmte Spannungsamplitude bei einer der Eigenfrequenzen die maximale zweite Spannungsamplitude erreicht.

## Beschreibung

Die Erfindung betrifft ein Verfahren zum Betreiben einer Maschinenanlage mit einem Wellenstrang.

Eine Maschinenanlage, wie beispielsweise ein Kraftwerk zur Erzeugung von Strom, weist einen elektrischen Generator und mindestens eine Turbine auf, wobei die Turbine den Generator antreibt. Dazu sind die Turbine und der Generator auf einem gemeinsamen Wellenstrang angeordnet. Es ist möglich in dem Wellenstrang Kupplungen vorzusehen, um einzelne Turbinen in den Wellenstrang einzukuppeln oder von dem Wellenstrang abzukuppeln.

Der Generator speist im Betrieb des Kraftwerks Strom in ein Stromnetz ein. Elektrische Störfälle in dem Stromnetz können dazu führen, dass via den Generator eine Torsionsschwingung des Wellenstrangs angeregt wird. Im ungünstigsten Fall kann es dabei zu einer Anregung einer der Eigenfrequenzen des Wellenstrangs kommen. Die Anregung bei einer Eigenfrequenz führt zu einer hohen torsionalen Spannungsbelastung des Wellenstrangs, was zu einer Reduzierung seiner Lebensdauer oder zu der Bildung von Spannungsrissen führen kann. Es wird erwartet, dass die Störfälle in dem Stromnetz in Zukunft häufiger auftreten werden, weil sich im Rahmen der Energiewende die Strukturen des Stromnetzes ändern.

Herkömmlich wird die Belastung des Wellenstrangs gemessen, in dem an mehreren Axialpositionen des Wellenstrangs seine Drehzahl hochauflösend gemessen wird. Aus den Differenzen der Drehzahlen an den unterschiedlichen Axialpositionen wird dann auf die Belastung des Wellenstrangs zurückgeschlossen. Jedoch sind in diesem Verfahren die Messtechnik und die zugehörige Auswertung aufwändig. Alternativ ist es möglich Schwingungen in der elektrischen Energieableitung des Kraftwerks zu messen. Für den Fall, dass in der Energieableitung potentiell anregende Schwingungen identifiziert werden, können jedoch keine Rückschlüsse auf die tatsächliche Belastung des Wellenstrangs gezogen werden.

Aufgabe der Erfindung ist es ein Verfahren zum Betreiben einer Maschinenanlage mit einem Wellenstrang zu schaffen, bei dem Belastungen des Wellenstrangs durch Torsionsschwingungen einfach detektierbar sind.

Das erfindungsgemäße Verfahren zum Betreiben einer einen Wellenstrang aufweisenden Maschinenanlage weist die Schritte auf: a) Rechnerisches Bestimmen der Eigenfrequenz von mindestens einer Torsionsschwingungsmode des Wellenstrangs und rechnerisches Bestimmen der während einer Schwingungsperiode der Torsionsschwingungsmode auftretenden mechanischen Spannungen des Wellenstrangs; b) Bestimmen jeweils einer Korrelation für jede Torsionsschwingungsmode zwischen einer ersten Spannungsamplitude, die an einer Position des Wellenstrangs auftritt, die für die Bildung von torsionalen Spannungsschäden anfällig ist, und einer zweiten Spannungsamplitude, die an einer Messstelle des Wellenstrangs auftritt, anhand der für die jeweilige Torsionsschwingungsmode rechnerisch bestimmten Spannungen; c) Festlegen einer maximalen ersten Spannungsamplitude für die Position; d) Bestimmen einer der maximalen ersten Spannungsamplitude entsprechenden maximalen zweiten Spannungsamplitude für die Messstelle anhand der Korrelation; e) Messen der Spannung des Wellenstrangs während der Wellenstrang rotiert an der Messstelle in Abhängigkeit von der Zeit; f) Bestimmen einer Spannungsamplitude bei jeder Eigenfrequenz aus der gemessenen Spannung; g) Ausgeben eines Signals in dem Fall, dass die aus den gemessenen Spannungen bestimmte Spannungsamplitude bei einer der Eigenfrequenzen die maximale zweite Spannungsamplitude erreicht.

Durch das Bestimmen der Korrelationen zwischen den an der Position und der Messstelle auftretenden Spannungsamplituden aus den rechnerisch bestimmten Spannungen können vorteilhaft Spannungsamplituden an Messstellen des Wellenstrangs bestimmt werden, die einer Messung nicht zugänglich sind. Um die Spannungsamplituden an der Position zu bestimmen, genügt eine einzige Messstelle an dem Wellenstrang, wobei die Messstelle beliebig gewählt werden kann. Dadurch ist das Verfahren vorteilhaft einfach durchführbar. Indem jeweils eine Korrelation für jede Torsionsmode bestimmt wird, können die Spannungsamplituden an der Position vorteilhaft mit einer hohen Genauigkeit bestimmt werden.

Auf das Signal hin können Maßnahmen ergriffen werden, um die Torsionsschwingungen des Wellenstrangs zu vermindern. Handelt es sich bei der Maschinenanlage um ein Kraftwerk zur Einspeisung von Strom in ein Stromnetz, kann beispielsweise eine Desynchronisation zwischen den Anregungen aus dem Stromnetz und den Torsionsschwingungen des Wellenstrangs vorgenommen werden. Dies kann beispielsweise erfolgen, in dem durch Abkoppeln einer Turbine oder einer Mehrzahl an Turbinen von dem Wellenstrang seine Eigenfrequenzen geändert werden. Auch ist es möglich das Kraftwerk vom Stromnetz durch ein Unterbrechen von elektrischen Leitungen abzukoppeln.

Bevorzugt wird in Schritt e) die Spannung mittels eines magnetostriktiven Sensors und/oder mittels eines Dehnmessstreifens gemessen, wobei die mittels des Dehnmessstreifens gemessenen Spannungen mittels Telemetrie übertragen werden. Der magnetostriktive Sensor erzeugt ein mittels einer Sendespule ein hochfrequentes Magnetfeld und durchflutet die Oberfläche des Wellenstrangs mit dem Magnetfeld. Der magnetostriktive Sensor verfügt über eine oder mehrere Empfangsspulen, welche mit der Sendespule einen magnetischen Kreis bilden und zur Detektion von Torsionsspannungen speziell angeordnet sind. Mit der speziellen Anordnung der Sendespule und Empfangsspulen kann die magnetische Suszeptibilität an der Oberfläche des Wellenstrangs bestimmt werden. Weil aufgrund des Villari-Effektes die magnetische Suszeptibilität eines Körpers von seiner mechanischen Spannung abhängt, hängt auch das von den Empfangsspulen detektierte Signal von der mechanischen Spannung der Oberfläche des Wellenstrangs ab. Der magnetostriktive Sensor gibt ein analoges Ausgangssignal aus, das proportional zu der Torsionsspannung des Wellenstrangs ist. Durch die Proportionalität des Ausgangssignals zu der Torsionsspannung ist die Datenverarbeitung vorteilhaft nur wenig rechenintensiv, wodurch das Verfahren einfach und schnell durchführbar ist. Sowohl der magnetostriktive Sensor als auch der Dehnmessstreifen ermitteln die Spannung des Wellenstrangs unmittelbar, wodurch das Verfahren ebenfalls einfach durchführbar ist.

Es ist bevorzugt, dass in Schritt f) die in Schritt e) gemessenen Spannungen mittels eines Bandpassfilters gefiltert werden, der ein um die Eigenfrequenz herum angeordnetes Frequenzband passieren lässt und/oder dass eine Fourier Transformation, insbesondere eine Fast-Fourier-Transformation, der in Schritt e) gemessenen Spannungen durchgeführt wird. Damit lassen sich die Spannungsamplituden der unterschiedlichen Torsionsschwingungsmoden vorteilhaft einfach bestimmen. In dem Fall, dass der Bandpassfilter eingesetzt wird, kann in Schritt g) das Signal schon kurze Zeit nach dem Erreichen der maximalen zweiten Spannungsamplitude ausgegeben wird. In dem Fall, dass die Fourier Transformation oder die Fast Fourier Transformation angewendet wird, erfolgt die Ausgabe des Signales nach Abschluss der Berechnung.

Es ist bevorzugt, dass in Schritt e) die Spannung an einer Mehrzahl in unterschiedlichen Axialpositionen des Wellenstrangs angeordneten Messstellen gemessen wird. Hier kann durch ein arithmetisches Mitteln der in der Mehrzahl an Messstellen ermittelten Eigenfrequenzen eine hohe Messgenauigkeit der Eigenfrequenzen erzielt werden. Zudem kann es vorkommen, dass eine der Messstellen mit einem Schwingungsknoten einer der Torsionsschwingungsmoden zusammenfällt, wodurch mit der Messstelle die Torsionsschwingungsmode nicht sichtbar wäre. Durch das Vorsehen der Mehrzahl der Messstellen ist die Wahrscheinlichkeit sehr gering, dass für eine Torsionsschwingungsmode alle Schwingungsknoten auf den Messstellen liegen.

Damit können mit einer hohen Wahrscheinlichkeit alle relevanten Torsionsschwingungsmoden detektiert werden.

In Schritt f) wird bevorzugt für eine ausgewählte Torsionsschwingungsmode nur diejenige Messstelle herangezogen, die für die ausgewählte Torsionsschwingungsmode die höchste in Schritt a) rechnerisch bestimmte mechanische Spannung aufweist. Dadurch wird vorteilhaft ein hohes Signal zu Rausch Verhältnis bei der Bestimmung der Spannungsamplituden erreicht. Es ist bevorzugt, dass in Schritt f) ein Zuordnen der Spannungsamplituden zu einer der Eigenfrequenzen erfolgt, in dem ein experimentelles Verhältnis der in Schritt f) bestimmten Spannungsamplituden und/oder Schwingungsphasen an der Mehrzahl an den Messstellen gebildet wird, ein rechnerisches Verhältnis der rechnerisch bestimmten Spannungsamplituden und/oder Schwingungsphasen an der Mehrzahl an den Messstellen gebildet wird und das experimentelle Verhältnis mit dem rechnerischen Verhältnis verglichen wird. Durch den Vergleich des experimentellen Verhältnisses mit dem rechnerischen Verhältnis lassen sich die Torsionsschwingungsmoden, in denen der Wellenstrang schwingt, vorteilhaft mit einer hohen Wahrscheinlichkeit richtig ermitteln.

Es ist bevorzugt, dass die in Schritt a) rechnerisch bestimmten Eigenfrequenzen entweder niedriger oder gleich der zweieinhalbfachen der Drehfrequenz des Wellenstrangs sind oder, in dem Fall, dass die Maschinenanlage ein Kraftwerk zur Stromerzeugung ist und die Netzfrequenz höher als die Drehfrequenz ist, niedriger oder gleich der zweieinhalbfachen der Netzfrequenz sind. Diese Eigenfrequenzen resultieren in besonders starken Spannungsbelastungen des Wellenstrangs, so dass ein Überwachen von diesen Frequenzen besonders vorteilhaft ist. In Schritt a) wird bevorzugt beim rechnerischen Bestimmen der Eigenfrequenz und der mechanischen Spannungen die Fliehkraftbelastung berücksichtigt, die der Wellenstrang im Betrieb der Maschinenanlage hat. Damit können die ersten Spannungsamplituden mit einer hohen Genauigkeit bestimmt werden. Die in Schritt b) bestimmte Korrelation zwischen der ersten Spannungsamplitude und der zweiten Spannungsamplitude ist bevorzugt eine Proportionalität.

In Schritt c) wird bevorzugt eine zusätzliche dritte maximale Spannungsamplitude, die höher als die erste maximale Spannungsamplitude ist, für die Position festgelegt, in Schritt d) wird eine der maximalen dritten Spannungsamplitude entsprechenden maximalen vierte Spannungsamplitude für die Messstelle anhand der Korrelation bestimmt und in Schritt g) wird ein Stop-Signal in dem Fall ausgeben, dass die in Schritt f) bestimmte Spannungsamplitude bei der Eigenfrequenz die maximale vierte Spannungsamplitude erreicht, wobei das Stop-Signal eine Abschaltung der Maschinenanlage auslöst. Damit kann vorteilhaft eine zu hohe Spannungsbelastung des Wellenstrangs automatisch unterbunden werden.

Bevorzugt weist das Verfahren den Schritt auf: d1) Grobkalibrieren des magnetostriktiven Sensors und/oder des Dehnmessstreifens an einer Welle, die mittels einer Prüfmaschine mit einer definierten Spannung belastet wird. Es ist bevorzugt, dass die Maschinenanlage einen Generator aufweist und das Verfahren mit dem Schritt durchgeführt wird: d2) Feinkalibrieren des magnetostriktiven Sensors und/oder des Dehnmessstreifens beim Rotieren des Wellenstrangs unter Heranziehen einer an der Messstelle bestimmten Spannung, die unter Heranziehen der vom Generator abgegebenen Leistung bestimmt wird. Von der vom Generator abgegebenen Leistung kann auf das Drehmoment zurückgeschlossen werden, dass der Generator auf den Wellenstrang ausübt. Von dem Drehmoment kann dann auf die im Wellenstrang auftretenden Spannungen zurückgeschlossen werden. Damit kann vorteilhaft die Kalibration an dem realen Wellenstrang und im Betrieb der Maschinenanlage erfolgen.

Es ist bevorzugt, dass in Schritt b) Korrelationen für eine Mehrzahl an Positionen des Wellenstrangs bestimmt werden, die für die Bildung von Spannungsschäden anfällig sind, in Schritt c) für jede Position eine jeweilige maximale erste Spannungsamplitude festgelegt wird, in Schritt d) für jede der Positionen eine entsprechende maximale zweite Spannungsamplitude bestimmt wird und in Schritt g) das Signal in dem Fall ausgegeben wird, dass eine der maximalen zweiten Spannungsamplituden erreicht wird. Damit kann vorteilhaft eine Mehrzahl an kritischen Stellen des Wellenstrangs mit lediglich einer einzigen Messstelle überwacht werden. Die maximalen ersten Spannungsamplituden an den verschiedenen Positionen können dabei gleich oder verschieden voneinander sein. Es ist auch möglich für die Mehrzahl an Positionen dritte maximale Spannungsamplituden festzulegen, wobei auch diese gleich oder verschieden voneinander sein können.

Es ist bevorzugt, dass die Messstellen auf dem Wellenstrang im Bereich eines frei liegenden Abschnitts des Wellenstrangs, im Bereich eines der Messtechnik zugänglichen Abschnitts des Wellenstrangs und/oder in einem Bereich eines rechnerisch bestimmten Spannungsmaximums angeordnet sind. Die Positionen sind bevorzugt im Bereich von Lagern, Kupplungen und/oder Schaufelfüßen angeordnet. Hierbei handelt es sich vorteilhaft um Positionen, die besonders gegen Spannungsschäden anfällig sind. Bevorzugt werden in Schritt a) die Eigenfrequenzen und die Spannungen mittels einer Finiten Elemente Methode rechnerisch bestimmt.

Im Folgenden wird anhand der beigefügten schematischen Zeichnung das erfindungsgemäße Verfahren näher erläutert. Es zeigen:
Figur 1 zeigt eine Seitenansicht eines Wellenstrangs mit vier rechnerisch bestimmten Torsionsmoden,
Figur 2 einen Querschnitt durch einen Wellenstrang mit einem magnetostriktiven Sensor und
Figur 3 ein Ablaufdiagramm eines beispielhaften Verfahrens.

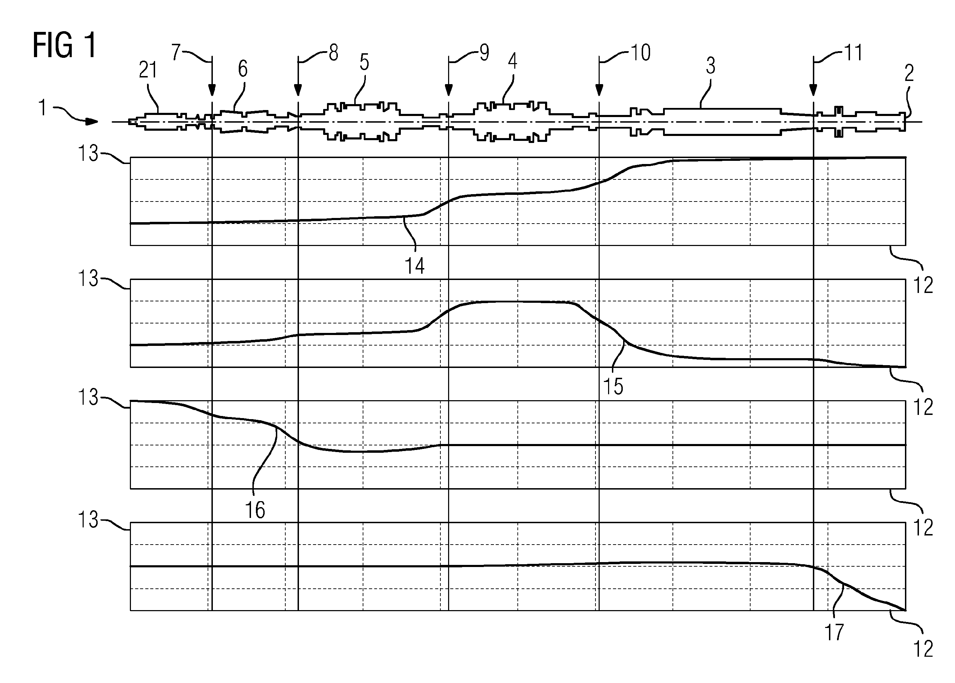

Wie es aus Figur 1 ersichtlich ist, weist eine Maschinenanlage 1 einen Generator 3 und mindestens eine Turbine auf, wobei der Generator 3 und die Turbine auf einem gemeinsamen Wellenstrang 2 angeordnet sind. Die Maschinenanlage 1 kann auch einer Mehrzahl an Wellensträngen aufweisen, wobei das Verfahren mit jedem der Wellenstränge durchgeführt wird. Die Maschinenanlage gemäß Figur 1 weist eine erste Turbine 4, eine zweite Turbine 5, eine dritte Turbine 6 und eine vierte Turbine 21 auf, die an einer axialen Seite des Generators 3 in dieser Reihenfolge mit zunehmendem Abstand von dem Generator 3 angeordnet sind. Der Wellenstrang 2 weist eine erste Messstelle 7, eine zweite Messstelle 8, eine dritte Messstelle 9, eine vierte Messstelle 10 und eine fünfte Messstelle 11 auf, die an verschiedenen und einer Messtechnik zugänglichen Axialpositionen des Wellenstrangs 2 angeordnet sind.

In Figur 1 sind ebenfalls rechnerisch bestimmte Torsionsschwingungsmoden dargestellt. Dargestellt sind dabei die vier niederfrequentesten Torsionsschwingungsmoden 14 bis 17, wobei die erste Torsionsschwingungsmode 14 die niedrigste Eigenfrequenz, die zweite Torsionsschwingungsmode 15 die zweitniedrigste Eigenfrequenz, die dritte Torsionsschwingungsmode 16 die drittniedrigste Eigenfrequenz und die vierte Torsionsschwingungsmode 17 die viertniedrigste Eigenfrequenz aufweist. Die vier Eigenrequenzen sind dabei niedriger als die zweieinhalbfache der Drehfrequenz des Wellenstrangs oder die zweieinhalbfache der Netzfrequenz, je nach dem welche von beiden Frequenzen höher ist. Jede der Torsionsschwingungsmoden 14 bis 17 ist beschrieben durch eine jeweilige Auftragung, in der über die Abszisse 12 die Axialposition des Wellenstrangs 2 und über die Ordinate 13 der Verdrehwinkel des Wellenstrangs 3 aufgetragen ist. Weil der Gradient des Verdrehwinkels proportional zu der mechanischen Spannung ist, kann durch Bilden des Gradienten des Verdrehwinkels die mechanische Spannung rechnerisch bestimmt werden. Es ist auch möglich die mechanische Spannung mittels einer Finiten Elemente Methode zu bestimmen.

In dem Verfahren wird mindestens eine Position des Wellenstrangs 2 identifiziert, die für die Bildung von Spannungsschäden anfällig ist. Die Spannungsschäden können Spannungsrisse und/oder Gewaltbrüche sein. Diese Positionen können beispielsweise in dem Bereich von Lagern, Kupplungen und/oder Schaufelfüßen liegen. Für jede der Positionen wird eine maximale erste Spannungsamplitude festgelegt, wobei diese derart gewählt wird, dass sie in einem Normalbetrieb der Maschinenanlage, in der keine resonanten Störungen auftreten, nicht erreicht wird. Des Weiteren ist sie derart gewählt, dass bei einem Erreichen noch keine Spannungsschäden an der Position auftreten. Die maximale erste Spannungsamplitude ist dabei gleich für alle Torsionsschwingungsmoden 14 bis 17. Es ist auch möglich eine maximale dritte Spannungsamplitude für die Position festzulegen, die höher als die maximale erste Spannungsamplitude ist. Die dritte maximale Spannungsamplitude ist dabei derart gewählt, dass bei einem Erreichen noch keine Spannungsschäden an dem Wellenstrang auftreten.

Anhand der rechnerisch bestimmten Spannungen wird für jede Torsionsschwingungsmode eine Korrelation zwischen der Spannungsamplitude an der Position und der Spannungsamplitude an mindestens eine der Messstellen 7 bis 11 bestimmt, wobei die Korrelation eine Proportionalität ist. Anhand der Korrelation kann eine zweite maximale Spannungsamplitude für die Messstelle 7 bis 11 bestimmt werden, wobei die zweite maximale Spannungsamplitude an der Messstelle 7 bis 11 auftritt, wenn die erste maximale Spannungsamplitude an der Position auftritt. Anhand der Korrelation kann auch eine vierte maximale Spannungsamplitude für die Messstelle 7 bis 11 bestimmt werden, wobei die vierte maximale Spannungsamplitude an der Messstelle 7 bis 11 auftritt, wenn die dritte maximale Spannungsamplitude an der Position auftritt.

Die mechanische Spannung der radial außen liegenden Oberfläche des Wellenstrangs 2 wird an jeder Messstelle 7 bis 11 mit jeweils mindestens einem magnetostriktiven Sensor 18 gemessen. Aus Redundanzgründen kann eine Mehrzahl an magnetostriktiven Sensoren an jeder Messstelle 7 bis 11 vorgesehen werden. Der magnetostriktive Sensor 18 weist eine Sendespule auf, mittels der ein Magnetfeld erzeugt wird. Die Oberfläche des Wellenstrangs 2 wird mit dem Magnetfeld durchflutet. Der magnetostriktive Sensor 18 weist eine Empfängerspule oder mehrere Empfängerspulen auf, die in einem magnetischen Kreis gemeinsam mit der Sendespule und der durchfluteten Oberfläche des Wellenstrangs 2 so geeignet angeordnet sind, dass damit die magnetische Suszeptibilität der Oberfläche des Wellenstrangs 2 bestimmt werden kann. Aufgrund des Villari-Effektes hängt die magnetische Suszeptibilität des Wellenstrangs 2 von seiner mechanischen Spannung ab. Das vom magnetostriktiven Sensor ausgegebene Signal ist dabei proportional zu der Torsionsspannung des Magnetfeldes. Wie es auf Figur 1 ersichtlich ist, sind die Erregerspule und die Empfängerspulen in einem Messkopf 19 des magnetostriktiven Sensors 18 integriert. Zwischen dem Messkopf 19 und dem Wellenstrang 2 ist ein Luftspalt 20 angeordnet, wodurch das Verfahren mit dem magnetostriktiven Sensor 18 berührungsfrei durchgeführt werden kann.

In dem Verfahren werden mittels des magnetostriktiven Sensors 18 die mechanischen Spannungen zeitaufgelöst gemessen. Die gemessenen Spannungen können dann mittels eines Bandpassfilters gefiltert werden, der ein um die Eigenfrequenz der Torsionschwingungssmode herum angeordnetes Frequenzband passieren lässt. Alternativ ist es möglich, die gemessenen Spannungen mittels einer Fourier Transformation, insbesondere einer Fast Fourier Transformation, auszuwerten. Sobald diese gefilterte Spannung oder die mittels der Fourier erhaltene Spannungsamplitude die zweite maximale Spannungsamplitude erreicht oder überschreitet, wird ein Signal ausgegeben. Für den Fall, dass die Eigenfrequenzen nahe zusammen liegen, kann es erforderlich sein einen Bandpassfilter vorzusehen, der Eigenfrequenzen für eine Mehrzahl an Torsionsschwingungsmoden passieren lässt. In diesem Fall wird das Signal ausgegeben, wenn die gefilterte Spannung die niedrigste der zweiten maximalen Spannungsamplituden der Mehrzahl an Torsionsschwingungsmoden erreicht oder überschreitet. Für den Fall, dass eine maximale vierte Spannungsamplitude vorgesehen ist, kann ein Abschalten der Maschinenanlage 1 in dem Fall vorgesehen werden, dass die gefilterte Spannung die maximale vierte Spannungsamplitude erreicht oder überschreitet.

Es ist möglich für eine bestimmte Torsionsschwingungsmode 14 bis 17 nur eine einzelne Messstelle 7 bis 11 heranzuziehen. Dabei kann diejenige Messstelle 7 bis 11 herangezogen werden, die die höchste rechnerisch bestimmte Spannung für die bestimmte Torsionsschwingungsmode 14 bis 17 aufweist, um ein hohes Signal zu Rausch Verhältnis zu erreichen. Dazu ist es möglich in Figur 1 für jede Torsionsschwingungsmode 14 bis 17 diejenige Messstelle 7 bis 11 zu identifizieren, die den größten Gradienten des Verdrehwinkels aufweist. Alternativ ist es möglich für jede Torsionsschwingungsmode 14 bis 17 diejenige Messstelle 7 bis 11 zu identifizieren, die die höchsten rechnerisch bestimmten Spannungen hat. In Figur 1 ist dies beispielsweise für die erste Torsionsschwingungsmode 14 die dritte Messstelle 9, für die zweite Torsionsschwingungsmode 15 die dritte Messstelle 9, für die dritte Torsionsschwingungsmode 16 die zweite Messstelle 8 und für die vierte Torsionsschwingungsmode 17 die fünfte Messstelle 11.

Es ist ebenfalls möglich, die an einer Mehrzahl an Messstellen 7 bis 11 gemessenen Spannungen zu verwenden, um die Torsionsschwingungsmode 14 bis 17, in der der Wellenstrang 2 schwingt, zu identifizieren. Dazu wird für jede Torsionsschwingungsmode 14 bis 17 ein rechnerisches Verhältnis der Form Aᵣ₁:Aᵣ₂:...:Aᵣₙ gebildet, wobei Aᵣₓ die rechnerisch bestimmte Spannungsamplitude an der x-ten Messstelle und n die Anzahl der Messstellen ist. Aus den aus den Messungen bestimmten Spannungsamplituden wird ein experimentelles Verhältnis der Form Aₑ₁:Aₑ₂:...:Aₑₙ gebildet, wobei wobei Aₑₓ die aus den Messungen bestimmte Spannungsamplitude an der x-ten Messstelle ist. Durch Vergleichen des rechnerischen Verhältnisses mit dem experimentellen Verhältnis kann selbst dann die Torsionsschwingungsmode, in der der Wellenstrang 2 schwingt, eindeutig zugeordnet werden, wenn die Eigenfrequenzen der verschiedenen Torsionsschwingungsmoden nahe zusammen liegen.

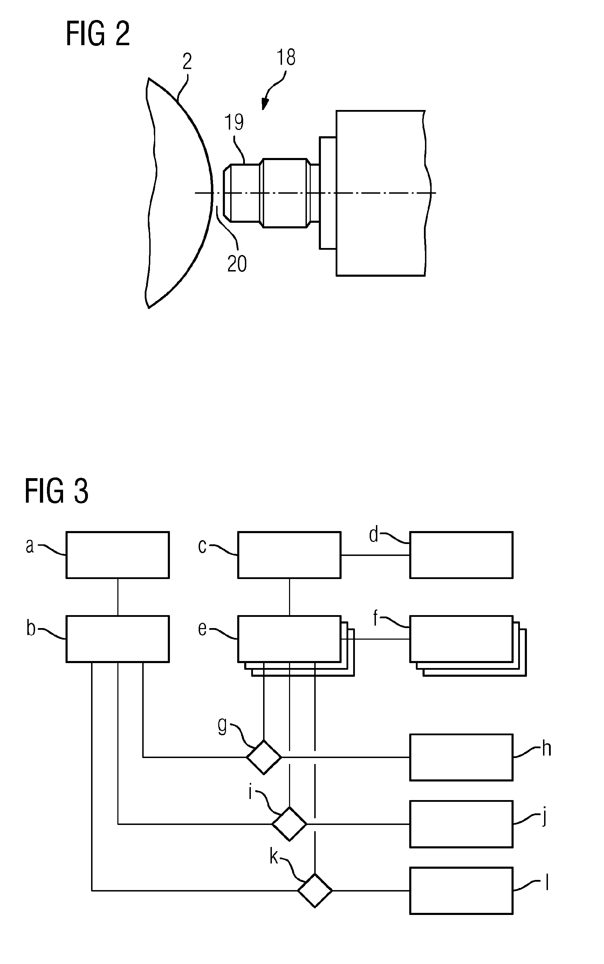

Figur 3 veranschaulicht das Verfahren in einem Ablaufdiagramm. In Schritt **a** wird eine rotordynamische Rechnung durchgeführt, in der die Eigenfrequenz für mindestens eine Torsionsschwingungsmode des Wellenstrangs 2 und die während einer Schwingungsperiode der Torsionsschwingungsmode auftretenden mechanischen Spannungen des Wellenstrangs 2 rechnerisch bestimmt werden. In Schritt **b** werden drei Grenzwerte σ_{STORE} σ_{W} und σ_{A} festgelegt, wobei σ_{STORE} < σ_{W} < σ_{A}, σ_{W} die zweite maximale Spannungsamplitude und σ_{A} die vierte maximale Spannungsamplitude sind. Dabei kann beispielsweise σ_{STORE}=0,5*σ_{A} und σ_{W}=0,75* σ_{A} gewählt werden.

In Schritt **c** werden die Spannungen des Wellenstrangs **2** gemessen und in Schritt **d** werden die gemessenen Spannungen angezeigt. In Schritt **e** werden die gemessenen Spannungen mittels der Bandpassfilter gefiltert, um die Spannungsamplituden bei der jeweiligen Eigenfrequenz zu bestimmen. In Schritt **f** werden die gefilterten Spannungsamplituden angezeigt.

In Schritt **g** wird abgefragt, ob die gefilterte Spannungsamplitude den Grenzwert σ_{STORE} überschreitet. Ist dies der Fall, so werden in Schritt **h** die gemessenen Spannungen gespeichert. Alternativ ist es möglich, die gemessenen Spannungen mit großen Zeitschritten dauernd zu speichern und in Schritt **h** die gemessenen Spannungen mit kleinen Zeitschritten zu speichern.

In Schritt **i** wird abgefragt, ob die gefilterte Spannungsamplitude den Grenzwert σ_{W} überschreitet. Ist dies der Fall, so wird in Schritt **j** ein Warnsignal ausgegeben. In Schritt **k** wird abgefragt, ob die gefilterte Spannungsamplitude den Grenzwert σ_{A} überschreitet. Ist dies der Fall, so wird in Schritt **1** ein Alarmsignal ausgegeben. Das Alarmsignal kann dazu führen, dass ein Betreiber der Maschinenanlage diese manuell abschaltet. Alternativ kann das Alarmsignal dazu führen, dass eine automatische Abschaltung der Maschinenanlage erfolgt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben einer einen Wellenstrang (2) aufweisenden Maschinenanlage (1) mit den Schritten:
a) Rechnerisches Bestimmen der Eigenfrequenz von mindestens einer Torsionsschwingungsmode des Wellenstrangs (2) und rechnerisches Bestimmen der während einer Schwingungsperiode der Torsionsschwingungsmode auftretenden mechanischen Spannungen des Wellenstrangs (2);
b) Bestimmen jeweils einer Korrelation für jede Torsionsschwingungsmode zwischen einer ersten Spannungsamplitude, die an einer Position des Wellenstrangs (2) auftritt, die für die Bildung von Spannungsschäden anfällig ist, und einer zweiten Spannungsamplitude, die an einer Messstelle (7 bis 11) des Wellenstrangs (2) auftritt, anhand der für die jeweilige Torsionsschwingungsmode rechnerisch bestimmten Spannungen;
c) Festlegen einer maximalen ersten Spannungsamplitude für die Position;
d) Bestimmen einer der maximalen ersten Spannungsamplitude entsprechenden maximalen zweiten Spannungsamplitude für die Messstelle (7 bis 11) anhand der Korrelation;
e) Messen der Spannung des Wellenstrangs (2) während der Wellenstrang (2) rotiert an der Messstelle (7 bis 11) in Abhängigkeit von der Zeit;
f) Bestimmen einer Spannungsamplitude bei jeder Eigenfrequenz aus der gemessenen Spannung;
g) Ausgeben eines Signals in dem Fall, dass die aus den gemessenen Spannungen bestimmte Spannungsamplitude bei einer der Eigenfrequenzen die maximale zweite Spannungsamplitude erreicht.

2. Verfahren gemäß Anspruch 1,
wobei in Schritt e) die Spannung mittels eines magnetostriktiven Sensors (18) und/oder mittels eines Dehnmessstreifens gemessen wird, wobei die mittels des Dehnmessstreifens gemessenen Spannungen mittels Telemetrie übertragen werden.

3. Verfahren gemäß Anspruch 1 oder 2,
wobei in Schritt f) die in Schritt e) gemessenen Spannungen mittels eines Bandpassfilters gefiltert werden, der ein um die Eigenfrequenz herum angeordnetes Frequenzband passieren lässt und/oder eine Fourier Transformation, insbesondere eine Fast-Fourier-Transformation, der in Schritt e) gemessenen Spannungen durchgeführt wird.

4. Verfahren gemäß einem der Ansprüche 1 bis 3,
wobei in Schritt e) die Spannung an einer Mehrzahl in unterschiedlichen Axialpositionen des Wellenstrangs (2) angeordneten Messstellen (7 bis 11) gemessen wird.

5. Verfahren gemäß Anspruch 4,
wobei in Schritt f) für eine ausgewählte Torsionsschwingungsmode nur diejenige Messstelle herangezogen wird, die für die ausgewählte Torsionsschwingungsmode die höchste in Schritt a) rechnerisch bestimmte mechanische Spannung aufweist.

6. Verfahren gemäß Anspruch 4,
wobei in Schritt f) ein Zuordnen der Spannungsamplituden zu einer der Eigenfrequenzen erfolgt, in dem ein experimentelles Verhältnis der in Schritt f) bestimmten Spannungsamplituden und/oder Schwingungsphasen an der Mehrzahl an den Messstellen (7 bis 11) gebildet wird, ein rechnerisches es Verhältnis der rechnerisch bestimmten Spannungsamplituden und/oder Schwingungsphasen an der Mehrzahl an den Messstellen (7 bis 11) gebildet wird und das experimentelle Verhältnis mit dem rechnerischen Verhältnis verglichen wird.

7. Verfahren gemäß einem der Ansprüche 1 bis 6,
wobei die in Schritt a) rechnerisch bestimmten Eigenfrequenzen entweder niedriger oder gleich der zweieinhalbfachen der Drehfrequenz des Wellenstrangs sind oder in dem Fall, dass die Maschinenanlage ein Kraftwerk zur Stromerzeugung ist und die Netzfrequenz des Kraftwerks höher als die Drehfrequenz ist, niedriger oder gleich der zweieinhalbfachen der Netzfrequenz sind.

8. Verfahren gemäß einem der Ansprüche 1 bis 7,
wobei in Schritt a) beim rechnerischen Bestimmen der Eigenfrequenz und der mechanischen Spannungen die Fliehkraftbelastung berücksichtigt wird, die der Wellenstrang (2) im Betrieb der Maschinenanlage hat.

9. Verfahren gemäß einem der Ansprüche 1 bis 8,
wobei die in Schritt b) bestimmte Korrelation zwischen der ersten Spannungsamplitude und der zweiten Spannungsamplitude eine Proportionalität ist.

10. Verfahren gemäß einem der Ansprüche 1 bis 9,
wobei in Schritt c) eine zusätzliche dritte maximale Spannungsamplitude, die höher als die erste maximale Spannungsamplitude ist, für die Position festgelegt wird, in Schritt d) eine der maximalen dritten Spannungsamplitude entsprechenden maximalen vierte Spannungsamplitude für die Messstelle anhand der Korrelation bestimmt wird und in Schritt g) ein Stop-Signal in dem Fall ausgeben wird, dass die in Schritt f) bestimmte Spannungsamplitude bei der Eigenfrequenz die maximale vierte Spannungsamplitude erreicht, wobei das Stop-Signal eine Abschaltung der Maschinenanlage (1) auslöst.

11. Verfahren gemäß Anspruch 2, mit dem Schritt:
d1) Grobkalibrieren des magnetostriktiven Sensors (18) und/oder des Dehnmessstreifens an einer Welle, die mittels einer Prüfmaschine mit einer definierten Spannung belastet wird.

12. Verfahren gemäß Anspruch 2,
wobei die Maschinenanlage einen Generator (6) aufweist, mit dem Schritt:
d2) Feinkalibrieren des magnetostriktiven Sensors (18) und/oder des Dehnmessstreifens beim Rotieren des Wellenstrangs (2) unter Heranziehen einer an der Messstelle (7 bis 11) bestimmten Spannung, die unter Heranziehen der vom Generator (3) abgegebenen Leistung bestimmt wird.

13. Verfahren gemäß einem der Ansprüche 1 bis 12,
wobei in Schritt b) Korrelationen für eine Mehrzahl an Positionen des Wellenstrangs (2) bestimmt werden, die für die Bildung von Spannungsschäden anfällig sind, in Schritt c) für jede Position eine jeweilige maximale erste Spannungsamplitude festgelegt wird, in Schritt d) für jede der Positionen eine entsprechende maximale zweite Spannungsamplitude bestimmt wird und in Schritt g) das Signal in dem Fall ausgegeben wird, dass eine der maximalen zweiten Spannungsamplituden erreicht wird.

14. Verfahren gemäß einem der Ansprüche 1 bis 13,
wobei die Messstellen (7 bis 11) auf dem Wellenstrang (2) im Bereich eines frei liegenden Abschnitts des Wellenstrangs (2), im Bereich eines der Messtechnik zugänglichen Abschnitt des Wellenstrangs (2) und/oder in einem Bereich eines rechnerisch bestimmten Spannungsmaximums angeordnet sind.

15. Verfahren gemäß einem der Ansprüche 1 bis 14,
wobei die Positionen im Bereich von Lagern, Kupplungen und/oder Schaufelfüßen angeordnet sind.
